# EUROPEAN PATENT APPLICATION

(11) **EP 4 550 631 A1**
(43) Date of publication of application: **07.05.2025**
(21) Application number: 24209896.0
(22) Date of filing: 30.10.2024
(51) Int. Cl.: H02K 1/276, H02K 15/035, H02K 15/027

(54) **ROTOR MANUFACTURING METHOD AND ROTOR**

(30) Priority: 31.10.2023 JP 2023186717
(71) Applicant: Nidec Corporation, Kyoto-shi, Kyoto 601-8205 (JP)
(72) Inventor: YONEYAMA, Takashi, Kyoto 601-8205 (JP)
(74) Representative: Viering, Jentschura & Partner mbB Patent- und Rechtsanwälte

(57) **Abstract**

A rotor manufacturing method includes a punching step of punching a steel sheet (80) to form a laminated steel sheet (81) having a core plate (60), a plurality of piece plates (70), and a plurality of connecting portions (83) each connecting each of the plurality of piece plates (70) and the core plate (60) in a radial direction; a laminating step of laminating the laminated steel sheets (81) in the thickness direction to form a laminated body (84); and a connecting portion removing step of removing the plurality of connecting portions (83) from the laminated body (84) to form magnet arrangement spaces (S) for arranging magnets (4) between the core plate (60) and the plurality of piece plates (70).

## Description

### Technical Field

The present invention relates to a rotor manufacturing method and a rotor.

### Background Art

There is known a rotor including a cylindrical rotor core made of laminated steel sheets, and a plurality of core pieces each of which are made of laminated steel sheets and which are arranged in a circumferential direction at positions spaced apart radially outward from the rotor core. In the rotor, a plurality of magnets are disposed between the rotor core and the core pieces. As such a rotor, a rotor including a rotor core having a base portion and a plurality of flake portions arranged radially outside the base portion, and a plurality of magnets arranged inside the rotor core is disclosed (for example, Patent Literature 1).

In the rotor, there is no steel-sheet region over the entire circumference in the circumferential direction between the base portion and the flake portions. In the rotor, a space is formed between magnets adjacent to each other in the circumferential direction. As a result, in the rotor, a flux barrier such as air or resin can be provided between the base portion and the flake portions and between the magnets adjacent to each other in the circumferential direction. This makes it possible to suppress the occurrence of a magnetic flux loop and improve the magnetic characteristics of the rotor.

### Citation List

### Patent Literature

Patent Literature 1: WO 2018/124093 A

### Summary of Invention

### Technical Problem

Meanwhile, in the rotor having the above-described configuration, the rotor core is constituted of a plurality of steel sheets laminated in the thickness direction. The plurality of core pieces separated radially outward from the rotor core are each formed of a plurality of steel sheets laminated in the thickness direction. Therefore, at the time of manufacturing the rotor, workability at the time of laminating the steel sheets is low. Therefore, a manufacturing method capable of easily manufacturing a rotor having improved magnetic characteristics is required.

An object of the present invention is to provide a manufacturing method capable of easily manufacturing a rotor having improved magnetic characteristics.

### Solution to Problem

A rotor manufacturing method according to an embodiment of the present invention is a method of manufacturing a rotor in which a core plate extends in a radial direction with respect to the central axis, a plurality of piece plates are arranged in a circumferential direction at positions spaced apart radially outward from the core plate, a plurality of the core plates are laminated in a thickness direction, a plurality of each of the plurality of piece plates are laminated in the thickness direction, and a plurality of magnets are located between the core plate and the plurality of piece plates. The rotor manufacturing method includes: a punching step of punching a steel sheet to form a laminated steel sheet including the core plate, the plurality of piece plates, and a plurality of connecting portions each connecting each of the plurality of piece plates and the core plate in a radial direction; a laminating step of laminating the laminated steel sheet in the thickness direction to form a laminated body; and a connecting portion removing step of removing the plurality of connecting portions from the laminated body, and forming magnet arrangement spaces for arranging the plurality of magnets between the core plate and the plurality of piece plates.

A rotor according to an embodiment of the present invention includes: a rotor core in a cylindrical shape in which steel sheets are laminated in a thickness direction and which extends in an axial direction; a plurality of core pieces in each of which steel sheets are laminated in the thickness direction and each of which extends in the axial direction, the plurality of core pieces being arranged in a circumferential direction at positions spaced apart radially outward from the rotor core; and a plurality of magnets each of which extends in the axial direction and which are arranged in the circumferential direction between the rotor core and the plurality of core pieces. The rotor core includes, on a radially outer surface, a core outer surface extending in the circumferential direction along a radially inner surface of each of the plurality of magnets as viewed in the axial direction, and a core recess recessed radially inward with respect to the core outer surface. The core piece includes, on a radially inner surface, a piece inner surface extending in the circumferential direction along a radially outer surface of each of the plurality of magnets as viewed in the axial direction, and a piece recess recessed radially outward with respect to the piece inner surface.

### Advantageous Effects of Invention

According to the rotor manufacturing method according to an embodiment of the present invention, it is possible to provide a manufacturing method capable of easily manufacturing a rotor having improved magnetic characteristics.

### Brief Description of Drawings

Fig. 1 is a perspective view illustrating a schematic configuration of a rotor according to an embodiment.
Fig. 2 is a plan view illustrating a schematic configuration of the rotor.
Fig. 3 is a cross-sectional view taken along line III-III of Fig. 2.
Fig. 4 is a plan view of a core plate and a plurality of piece plates constituting one layer in the rotor.
Fig. 5A is a diagram schematically illustrating a shape of a radially outer end surface of a core plate.
Fig. 5B is a diagram schematically illustrating a shape of a radially inner end surface of a piece plate.
Fig. 6A is a diagram for explaining a pushback process.
Fig. 6B is a diagram for explaining a pushback process.
Fig. 7 is a flowchart illustrating a rotor manufacturing method.
Fig. 8 illustrates punching of a steel sheet.
Fig. 9 is a diagram illustrating a laminated steel sheet formed by punching a steel sheet as viewed in the thickness direction.
Fig. 10 is a diagram illustrating a state of inserting a laminated steel sheet into a mold.
Fig. 11 is a diagram illustrating a schematic configuration of a laminated body formed in a mold.
Fig. 12 illustrates a state of removing connecting portions from the laminated body.
Fig. 13 is a cross-sectional view of the mold after the connecting portions are removed from the laminated body.
Fig. 14 is a cross-sectional view of the mold after the mold is filled with resin.
Fig. 15 is a perspective view illustrating a schematic configuration of the laminated body taken out from the mold.
Fig. 16 illustrates a state or arranging magnets in magnet arrangement spaces.
Fig. 17A illustrates a state of separating connecting portions from the core plate and the plurality of piece plates by a pushback process.
Fig. 17B schematically illustrates a shape of an end surface of the core plate separated from the connecting portion by the pushback process.
Fig. 17C schematically illustrates a state in which the end surface of the core plate is deformed when the connecting portion is returned to the original position with respect to the core plate by the pushback process.
Fig. 17D schematically illustrates the shape of an end surface of the core plate deformed by the pushback process.

### Description of Embodiments

Hereinafter, an exemplary embodiment of the present invention will be described in detail with reference to the drawings. The same or corresponding parts in the drawings are denoted by the same reference numerals, and the description thereof will not be repeated. In addition, the dimensions of the components in the drawings do not faithfully represent the actual dimensions of the components, the dimensional ratios of the components, and the like.

In the following description, a direction parallel to the central axis of a rotor is referred to as an "axial direction", a direction orthogonal to the central axis is referred to as a "radial direction", and a direction along an arc with the central axis as the center is referred to as a "circumferential direction". In the present specification, a direction extending linearly between two points having the same distance from the center when the member is viewed in the axial direction is also referred to as a "circumferential direction". That is, in the present specification, the "circumferential direction" includes a direction along the outer peripheral surface of a polygonal member when viewed in the axial direction.

Further, in the following description, "radial direction" and "circumferential direction" of an electromagnetic steel sheet mean a radial direction and a circumferential direction centered on a center point of a central hole punched in the electromagnetic steel sheet.

Further, in the following description, expressions such as "fixed", "connected" and "attached" (hereinafter, fixed or the like) are used not only when the members are directly fixed to each other, but also when the members are fixed via another member. That is, in the following description, the expression such as fixing includes the meaning of direct and indirect fixing between members.

### (Embodiment)

### (Configuration of rotor)

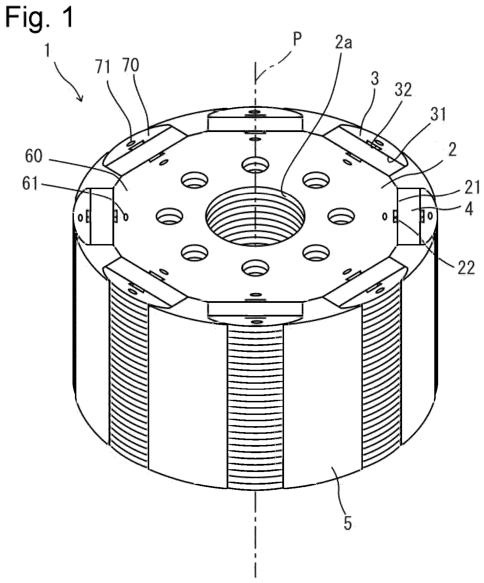

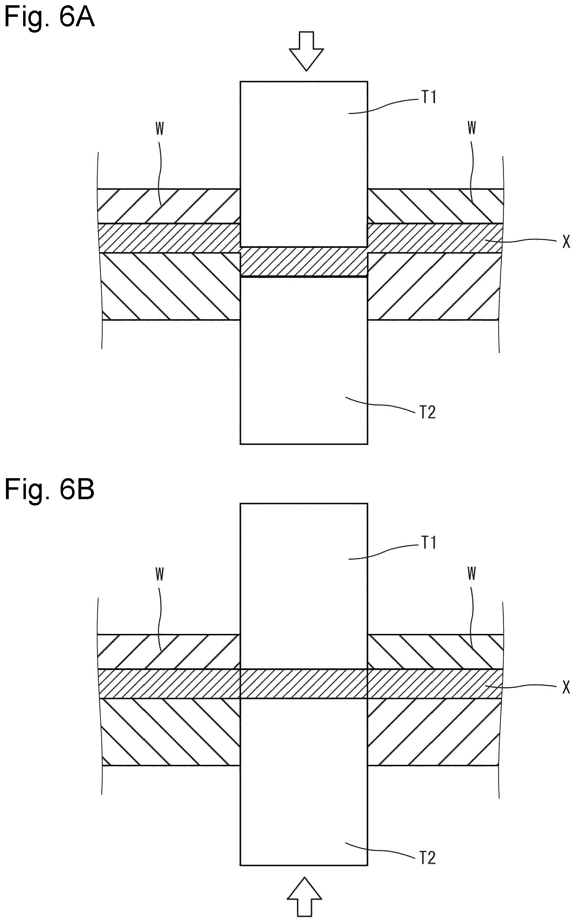

With reference to Figs. 1 to 6B, a rotor 1 according to an exemplary embodiment of the present invention will be described. The rotor 1 is disposed radially inside a cylindrical stator (not illustrated) so as to be rotatable about a central axis P. The rotor 1 rotates about the central axis P with respect to the stator.

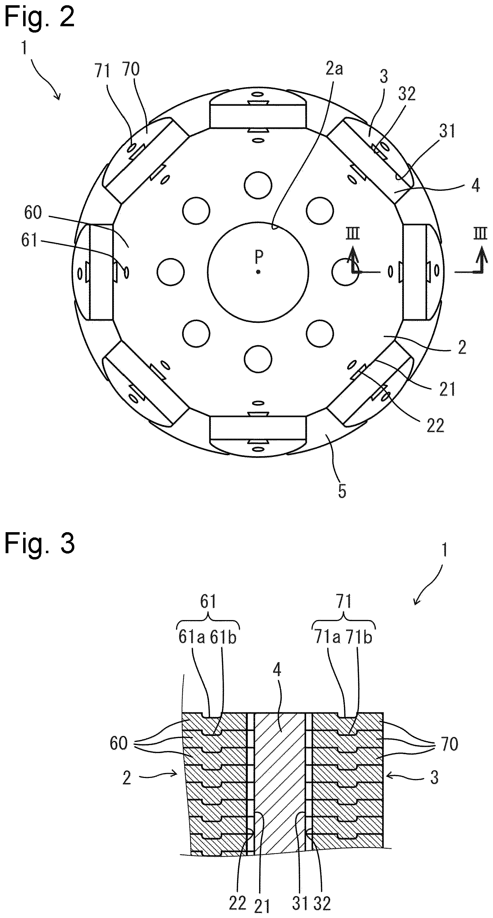

As illustrated in Figs. 1 and 2, the rotor 1 has a cylindrical shape extending axially with the central axis P being the center. The rotor 1 includes a rotor core 2, a plurality of core pieces 3, a plurality of magnets 4, and a resin portion 5.

The rotor core 2 has a shape extending in the radial direction with respect to the central axis P when viewed in the axial direction, and extends in the axial direction along the central axis P. In the present embodiment, the rotor core 2 has a polygonal shape when viewed in the axial direction. The rotor core 2 has a shaft hole 2a penetrating in the axial direction along the central axis P in the central portion. A shaft (not illustrated) is fixed to the shaft hole 2a in a state of penetrating the shaft hole 2a in the axial direction. As a result, the rotor core 2 rotates together with the shaft. In the present specification, a shape having a hole that extends in the radial direction with respect to the center when viewed in the axial direction and penetrates in the axial direction along the central axis P is referred to as a tubular shape. That is, the tubular shape includes not only a member having a circular shape as viewed in the axial direction but also a member having a polygonal shape as viewed in the axial direction.

The rotor core 2 has a plurality of core outer surfaces 21 and a plurality of core recesses 22 on the radially outer surface. The core outer surface 21 is a surface extending in the circumferential direction along a radially inner surface of the magnet 4 described later.

The core recess 22 is recessed radially inward with respect to the core outer surface 21 when the rotor core 2 is viewed in the axial direction. The core recess 22 extends in the axial direction from one end to the other end of the rotor core 2 in the axial direction. In the present embodiment, the core recess 22 is located at the center of the core outer surface 21 as viewed in the axial direction.

As illustrated in Fig. 3, in the rotor core 2, a plurality of plate-like core plates 60 formed in a polygonal shape when viewed in the axial direction are laminated in the thickness direction. That is, in the present embodiment, when viewed in the thickness direction, the plurality of core plates 60 constituting the rotor core 2 has the same shape as the shape of the rotor core 2 as viewed in the axial direction. The core plate 60 is formed by punching a steel sheet 80 by means of a method of manufacturing the rotor 1 described later.

In the present embodiment, the core plate 60 includes a plurality of core caulking portions 61. As illustrated in Fig. 3, the core caulking portion 61 is formed by pushing out the caulking position of the core plate 60 in the thickness direction. That is, the core caulking portion 61 includes a caulking recess 61a located on one surface in the thickness direction of the core plate 60 and a caulking protrusion 61b located on the other surface in the thickness direction.

The plurality of laminated core plates 60 are connected in the thickness direction by fitting the caulking protrusion 61b of the other core plate 60 into the caulking recess 61a of one core plate 60 adjacent to each other in the lamination direction.

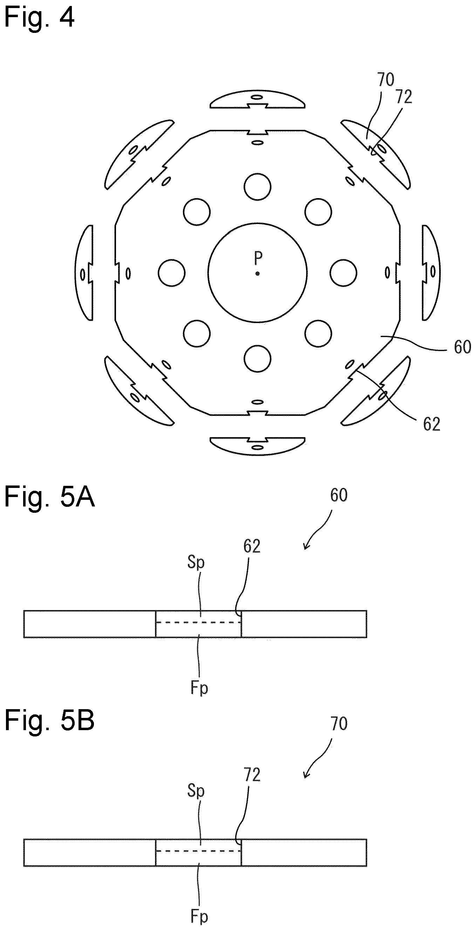

As illustrated in Fig. 4, the core plate 60 has a core plate recess 62 constituting a part of the core recess 22 of the rotor core 2. Fig. 5A schematically illustrates the shape of an inner surface of the core plate recess 62. As illustrated in Fig. 5A, a shear plane Sp and a fracture plane Fp are aligned in the thickness direction on the inner surface of the core plate recess 62. Such a shape of the end surface is obtained by a pushback process.

Figs. 6A and 6B illustrates a pushback process. The pushback process is performed using a pair of upper and lower tools W that sandwiches a part of a steel sheet X in the thickness direction, a tool T1 that pushes a part of the steel sheet X in the thickness direction, and a tool T2 that returns the portion pushed out in the thickness direction of the steel sheet X to the original position. The tools T1 and T2 are movable in the thickness direction of the steel sheet X with respect to the tool W.

As illustrated in Fig. 6A, when the tool T1 moves to one side in the thickness direction of the steel sheet X with respect to the tool W, a partial region of the steel sheet X is pushed out in the thickness direction by the tool T1. As a result, shearing is performed at the boundary between the portion of the steel sheet X sandwiched by the tool W and the region pushed by the tool T1. The shear plane Sp is formed in a portion separated by the shearing.

In the pushback process, the moving distance of the tool T1 with respect to the tool W is a moving distance that separates the boundary of the steel sheet X or a moving distance that does not separate the boundary. In the present embodiment, the tool T1 moves a distance that does not separate the boundary of the steel sheet X with respect to the tool W.

Then, as illustrated in Fig. 6B, the tool T2 is moved to the other side in the thickness direction of the steel sheet X with respect to the tool W to return the partial region of the steel sheet X to the original position of the steel sheet X.

By the pushback process described above, the boundary of the steel sheet X is partially separated in the thickness direction, and the remaining portion in the thickness direction is not separated. Therefore, in the steel sheet X, the strength of the boundary portion is weaker than that of the other portions. Thus, the steel sheet X can be easily divided, for example, at the boundary. The fracture plane Fp is formed in the divided portion.

As illustrated in Figs. 1 and 2, the plurality of core pieces 3 are arranged in the circumferential direction of the rotor core 2 at positions spaced apart radially outward from the rotor core 2. The core pieces 3 adjacent to each other in the circumferential direction are separated from each other. The plurality of core pieces 3 have the same shape. Therefore, one of the core pieces 3 will be described below.

The core piece 3 extends in the axial direction. The core piece 3 has an arcuate shape when viewed in the axial direction. Specifically, the radially inner surface of the core piece 3 extends linearly in the circumferential direction of the rotor core 2 when viewed in the axial direction. The radially outer surface of the core piece 3 has an arc shape when viewed in the axial direction.

The core piece 3 has a piece inner surface 31 extending in the circumferential direction and a piece recess 32, on the radially inner surface. The piece inner surface 31 is a surface extending in the circumferential direction along a radially outer surface of the magnet 4 described later.

The piece recess 32 is recessed radially outward with respect to the piece inner surface 31 when the piece recess 32 is viewed in the axial direction. The piece recess 32 extends in the axial direction from one end to the other end of the core piece 3 in the axial direction. In the present embodiment, the piece recess 32 is located at the center of the piece inner surface 31 as viewed in the axial direction.

As illustrated in Fig. 3, in the core piece 3, a plurality of plate-like piece plates 70 each formed in an arcuate shape as viewed in the axial direction are laminated in the thickness direction. That is, in the present embodiment, when viewed in the thickness direction, the plurality of piece plates 70 constituting the core piece 3 has the same shape as the shape of the core piece 3 as viewed in the axial direction. The piece plate 70 is formed by punching a steel sheet 80 by the method of manufacturing the rotor 1 described later.

In the present embodiment, the piece plate 70 includes a piece caulking portion 71. As illustrated in Fig. 3, the piece caulking portion 71 is formed by pushing out the caulking position of the piece plate 70 in the thickness direction. That is, the piece caulking portion 71 includes a caulking recess 71a located on one surface in the thickness direction of the piece plate 70 and a caulking protrusion 71b located on the other surface in the thickness direction.

The plurality of laminated piece plates 70 are connected in the thickness direction by fitting the caulking protrusion 71b of the other piece plate 70 into the caulking recess 71a of one piece plate 70 adjacent to each other in the lamination direction.

As illustrated in Fig. 4, the piece plate 70 has a piece plate recess 72 constituting a part of the piece recess 32 of the core piece 3. Fig. 5B schematically illustrates the shape of an inner surface of the piece plate recess 72. As illustrated in Fig. 5B, a shear plane Sp and a fracture plane Fp are aligned in the thickness direction on the inner surface of the piece plate recess 72. That is, the piece plate recess 72 is formed by the pushback process described above.

As illustrated in Figs. 1 and 2, the plurality of magnets 4 are arranged in the circumferential direction of the rotor core 2 between the rotor core 2 and the plurality of core pieces 3. The magnets 4 adjacent to each other in the circumferential direction are separated from each other. As illustrated in Fig. 3, each of the plurality of magnets 4 has a columnar shape extending in the axial direction.

As illustrated in Figs. 1 and 2, the resin portion 5 is located between the core pieces 3 adjacent to each other in the circumferential direction and between the magnets 4 adjacent to each other in the circumferential direction. The resin portion 5 forms the rotor 1 having a circular shape when viewed in the axial direction. The rotor core 2 and the plurality of core pieces 3 are integrated by the resin portion 5.

The resin portion 5 is formed by filling a melted resin 85 between the core pieces 3 adjacent to each other in the circumferential direction and between the magnets 4 adjacent to each other in the circumferential direction, in the method of manufacturing the rotor 1 described later.

### (Rotor manufacturing method)

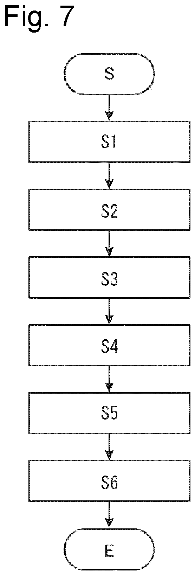

Next, an exemplary method of manufacturing the rotor 1 of the present invention will be described with reference to Figs. 7 to 16. As illustrated in Fig. 7, the method of manufacturing the rotor 1 includes a caulking portion forming step S1, a punching step S2, a laminating step S3, a connecting portion removing step S4, a resin filling step S5, and a magnet arranging step S6. In the present embodiment, the punching step S2 includes a pushback step.

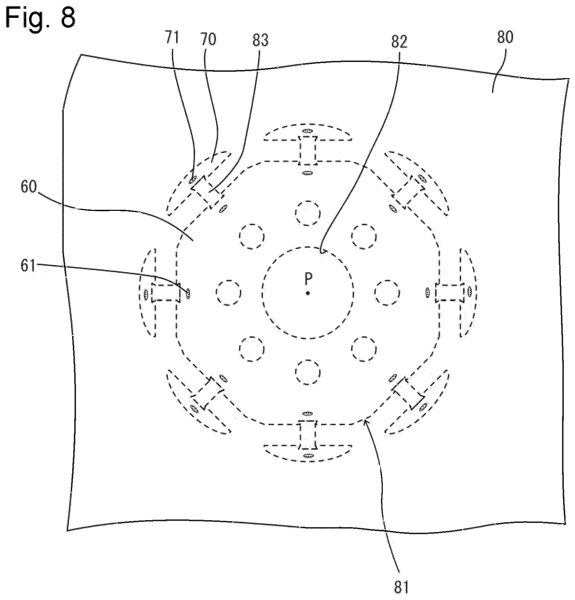

First, an electromagnetic steel sheet that is a magnetic material is prepared. Hereinafter, an electromagnetic steel sheet is referred to as the steel sheet 80. Fig. 8 illustrates punching of the steel sheet 80. In Fig. 8, the shape of a laminated steel sheet 81 formed by the punching step S2 is indicated by a broken line.

In the caulking portion forming step S1, the core caulking portion 61 is formed at a caulking position of a portion of the steel sheet 80 that becomes the core plate 60. In addition, the piece caulking portion 71 is formed at a caulking position of a portion of the steel sheet 80 that becomes the piece plate 70. The caulking portion forming step S1 may be performed simultaneously with the punching step S2 described later, or may be performed after the punching step S2.

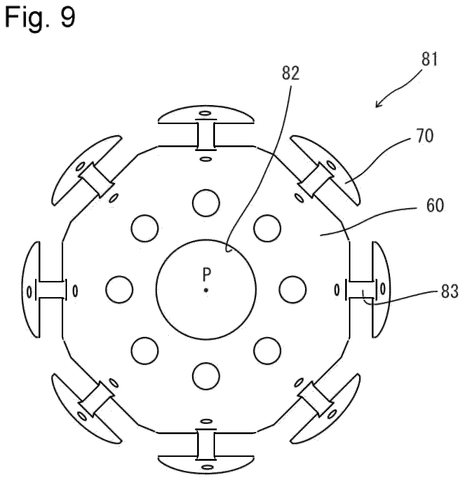

Next, in the punching step S2, a portion indicated by the broken lines in Fig. 8 is cut to form the laminated steel sheet 81. Fig. 9 illustrates the laminated steel sheet 81 formed by the punching step S2. In the punching step S2, the central hole 82 constituting the shaft hole 2a of the rotor 1, the core plate 60, and the plurality of piece plates 70 are formed. In addition, the plurality of connecting portions 83, each connecting each of the plurality of piece plates 70 and the core plate 60 in the radial direction, are formed. The punching step S2 is performed by press working. Since the press working is similar to general press working, the description thereof will be omitted.

In the laminated steel sheet 81, the positions of the plurality of piece plates 70 with respect to the core plate 60 are the same as the positions of the plurality of piece plates 70 with respect to the core plate 60 in the rotor 1. That is, in the punching step S2, by forming the plurality of connecting portions 83 between the core plate 60 and the plurality of piece plates 70, the plurality of piece plates 70 are arranged at positions with respect to the core plate 60 in the rotor 1. The plurality of connecting portions 83 are removed in the connecting portion removing step S4 described later. Therefore, the rotor 1 manufactured by the manufacturing method of the present embodiment does not include the connecting portion 83.

The punching step S2 includes a pushback step of performing the above-described pushback process on the plurality of connecting portions 83 with respect to the core plate 60 and the plurality of piece plates 70. As a result, with the plurality of connecting portions 83, the laminated steel sheet 81 in which the plurality of piece plates 70 are connected to the core plate 60 in an easily separable state is formed.

That is, in the present embodiment, the punching step S2 includes a pushback step of performing a pushback process on the connecting portion 83 with respect to the core plate 60 and the piece plate 70. The core plate 60 and the piece plate 70 are connected to each other in the radial direction by the connecting portion 83 returned to the original position with respect to the core plate 60 and the piece plate 70 in the pushback step.

In the pushback step of the present embodiment, the tool T1 pushes out the connecting portion 83 in the thickness direction with respect to the pair of upper and lower tools W sandwiching the core plate 60 and the plurality of piece plates 70 in the thickness direction. At this time, the tool T1 moves a distance by which the connecting portion 83 is not separated from the core plate 60 and the plurality of piece plates 70. That is, the connecting portion 83 is partially separated from the core plate 60 and the piece plate 70 at the boundary portion between the connecting portion 83 and the core plate 60 and the boundary portion between the connecting portion 83 and the piece plate 70 by the pushback step. As a result, the connecting portion 83 is easily removable after the laminated steel sheets 81 are laminated.

In the present embodiment, in the pushback step, the radially inner side of the connecting portion 83 is subjected to pushback process at a position radially inward from the radially outer end surface of the core plate 60. The radially outer side of the connecting portion 83 is subjected to pushback process at a position radially outward from the radially inner end surface of the piece plate 70.

As a result, the core plate recess 62 is formed on the radially outer end surface of the core plate 60, and the piece plate recess 72 is formed on the radially inner end surface of the piece plate 70. Therefore, the end portion of the connecting portion 83 on the core plate 60 side can be positioned in the core plate recess 62. In addition, the end portion of the connecting portion 83 on the piece plate 70 side can be positioned in the piece plate recess 72. As a result, the connected state of the core plate 60, the piece plate 70, and the connecting portion 83 can be easily maintained.

Next, in the laminating step S3, the laminated steel sheet 81 formed in the punching step S2 is laminated in the thickness direction to form a laminated body 84. In the laminated steel sheet 81, the core plate 60 and the piece plate 70, which are separated in the radial direction in the rotor 1, are connected by the connecting portion 83. As a result, the workability of the laminating step S3 can be improved as compared with the case where the core plate 60 and the piece plate 70 are respectively laminated in the state where the core plate 60 and the piece plate 70 are separated.

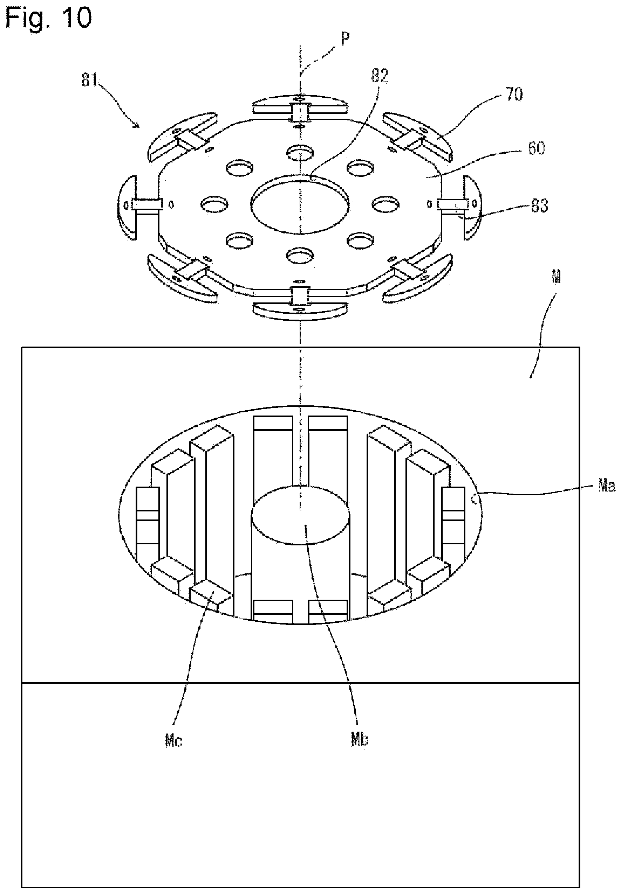

Specifically, the plurality of laminated steel sheets 81 are sequentially inserted into an accommodation space Ma of a mold M illustrated in Fig. 10.

As illustrated in Fig. 10, the accommodation space Ma of the mold M is a columnar space extending in the axial direction along the central axis P. The radial dimension of the accommodation space Ma is equal to the radial dimension of the rotor 1.

The mold M includes a central hole positioning portion Mb and a plurality of circumferential positioning portions Mc. The central hole positioning portion Mb has a columnar shape. The central hole positioning portion Mb extends in the mold M in the axial direction along the central axis P of the mold M. The radial dimension of the central hole positioning portion Mb is equal to the radial dimension of the central hole 82 of the laminated steel sheet 81. Accordingly, when the laminated steel sheet 81 is inserted into the accommodation space Ma, the central hole positioning portion Mb can be inserted into the central hole 82 of the laminated steel sheet 81. Therefore, the laminated steel sheet 81 can be easily inserted into the accommodation space Ma.

Each of the plurality of circumferential positioning portions Mc has a prismatic shape. The plurality of circumferential positioning portions Mc extend in the axial direction of the central axis P in the mold M. The plurality of circumferential positioning portions Mc are arranged in the circumferential direction around the central axis P. Specifically, when viewed in the axial direction, the circumferential positioning portion Mc extends in the axial direction at a position overlapping the space surrounded by the connecting portion 83, the core plate 60, and the piece plate 70 in the laminated steel sheet 81 as viewed in the thickness direction. Accordingly, when the laminated steel sheet 81 is inserted into the accommodation space Ma, the laminated steel sheet 81 can be positioned in the circumferential direction.

In the laminating step S3, the laminated steel sheet 81 is laminated while being caulked to the laminated steel sheet 81 previously inserted in the accommodation space Ma. Specifically, when the laminated steel sheet 81 is inserted into the accommodation space Ma, the caulking protrusion 61b formed on the core plate 60 of the laminated steel sheet 81 is fitted into the caulking recess 61a formed on the core plate 60 of the laminated steel sheet 81 previously inserted in the accommodation space Ma. When the laminated steel sheet 81 is inserted into the accommodation space Ma, the caulking protrusion 71b formed on the piece plate 70 of the laminated steel sheet 81 is fitted into the caulking recess 71a formed on the piece plate 70 of the laminated steel sheet 81 previously inserted in the accommodation space Ma.

As a result, the laminated body 84 in which the plurality of laminated steel sheets 81 are caulked in the thickness direction is formed. That is, in the laminating step S3, the laminated steel sheets 81 adjacent to each other in the lamination direction are laminated while being caulked in the thickness direction at the caulking position of the core plate 60 and the caulking position of each of the plurality of piece plates 70.

As a result, the piece plates 70 can be caulked in the thickness direction in a state where the plurality of piece plates 70 are connected to the core plate 60. Therefore, the piece plate 70 can be easily caulked as compared with the case of caulking the piece plate 70 in a state of not being connected to the core plate 60. Therefore, the rotor 1 including the core plate 60 and the plurality of piece plates 70 arranged in the circumferential direction at positions spaced apart radially outward from the core plate 60 can be more easily manufactured.

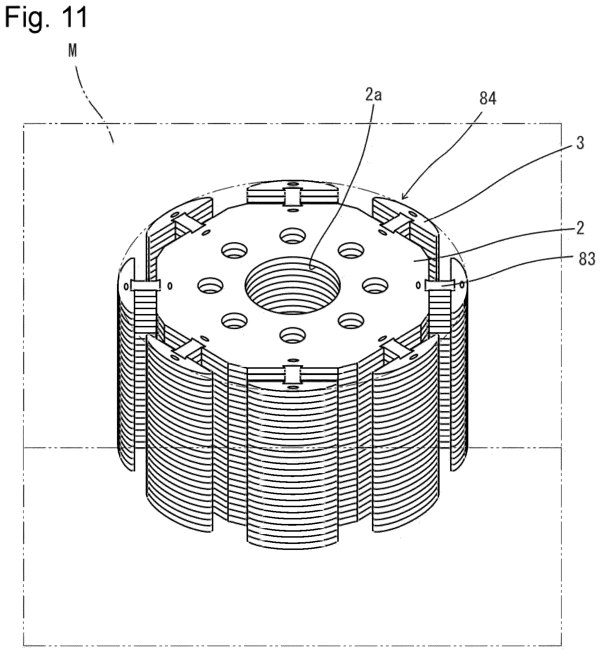

Fig. 11 illustrates the laminated body 84 formed in the accommodation space Ma by the laminating step S3. In Fig. 11, for the sake of explanation, the mold M is indicated by a two-dot chain line, and the laminated body 84 is indicated by a solid line. As illustrated in Fig. 11, the laminated body 84 includes the cylindrical rotor core 2 in which the core plates 60 are laminated in the thickness direction and which extends in the axial direction, and the plurality of core pieces 3 in which the piece plates 70 are laminated in the thickness direction and which extend in the axial direction and are arranged in the circumferential direction at positions spaced apart radially outward from the rotor core 2. In the laminated body 84, the core plate 60 constituting the rotor core 2 and the piece plate 70 constituting the core piece 3 are radially connected by the connecting portion 83.

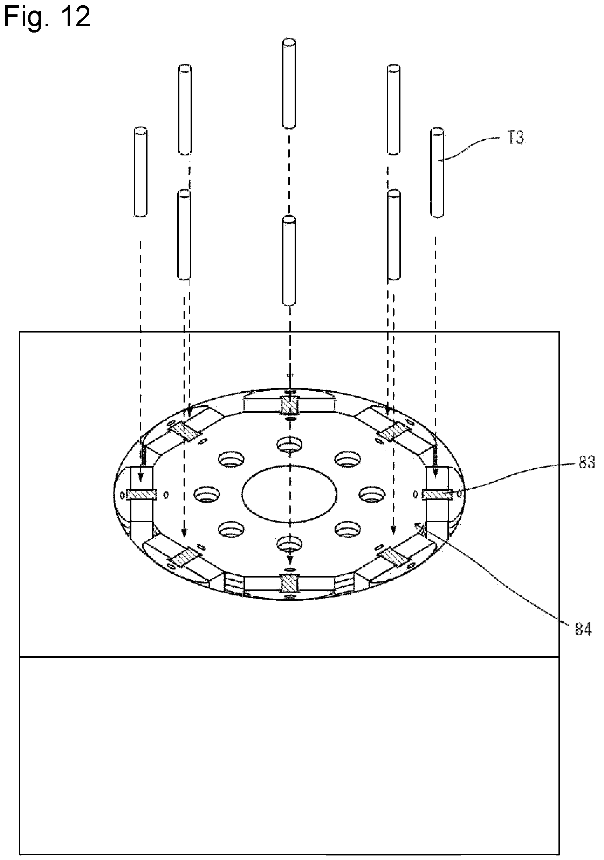

Next, in the connecting portion removing step S4, as illustrated in Fig. 12, the plurality of connecting portions 83 are removed from the laminated body 84. Note that, in Fig. 12, the plurality of connecting portions 83 are hatched for the sake of explanation.

Specifically, the connecting portion 83 is pushed in the axial direction by the tool T3 moving toward the mold M. Accordingly, a portion which is not separated between the core plate 60 and the connecting portion 83 and a portion which is not separated between the piece plate 70 and the connecting portion 83 are divided.

By dividing the core plate 60 from the connecting portion 83, the fracture plane Fp is formed on the inner surface of the core plate recess 62 of the core plate 60. Therefore, the shear plane Sp and the fracture plane Fp formed by the pushback process are aligned in the thickness direction on the inner surface of the core plate recess 62.

Further, by dividing the piece plate 70 from the connecting portion 83, the fracture plane Fp is formed on the inner surface of the piece plate recess 72 of the piece plate 70. Therefore, on the inner surface of the piece plate recess 72, the shear plane Sp and the fracture plane Fp formed by the pushback process are aligned in the thickness direction.

As described above, the connecting portion 83 is subjected to the pushback process with respect to the core plate 60 and the piece plate 70. Therefore, the connecting portion 83 can be easily removed. By removing the connecting portion 83, magnet arrangement spaces S in each of which the magnet 4 is to be arranged are formed between the rotor core 2 and the plurality of core pieces 3.

Next, in the resin filling step S5, the space outside the rotor core 2 in the accommodation space Ma is filled with resin.

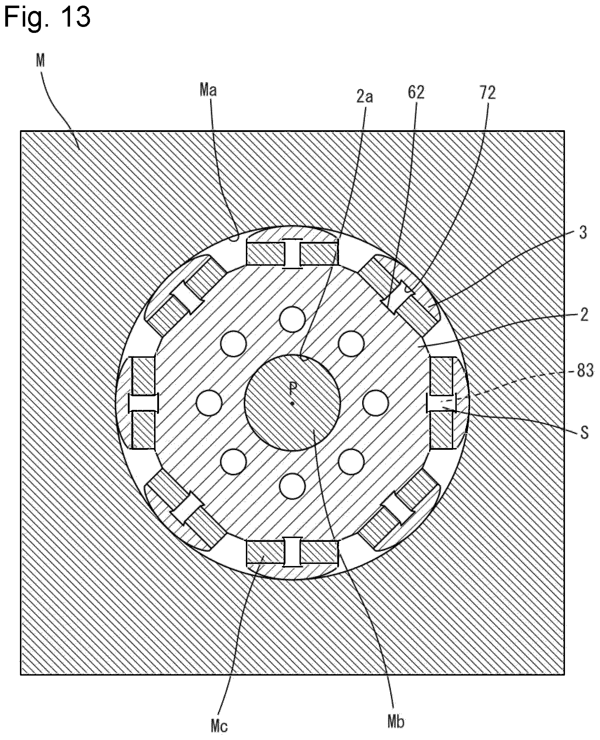

Fig. 13 is a cross-sectional view of the rotor core 2 and the plurality of core pieces 3 inserted in the accommodation space Ma of the mold M, and the mold M, after the connecting portion removing step S4 is performed. As illustrated in Fig. 13, in a state where the rotor core 2 and the plurality of core pieces 3 are positioned in the accommodation space Ma of the mold M, a space surrounded by the inner peripheral surface of the mold M, the circumferential end surface of the core piece 3, the circumferential end surface of the circumferential positioning portion Mc, and the outer peripheral surface of the rotor core 2 is formed in the mold M. In the connecting portion removing step S4, the space is filled with the resin 85.

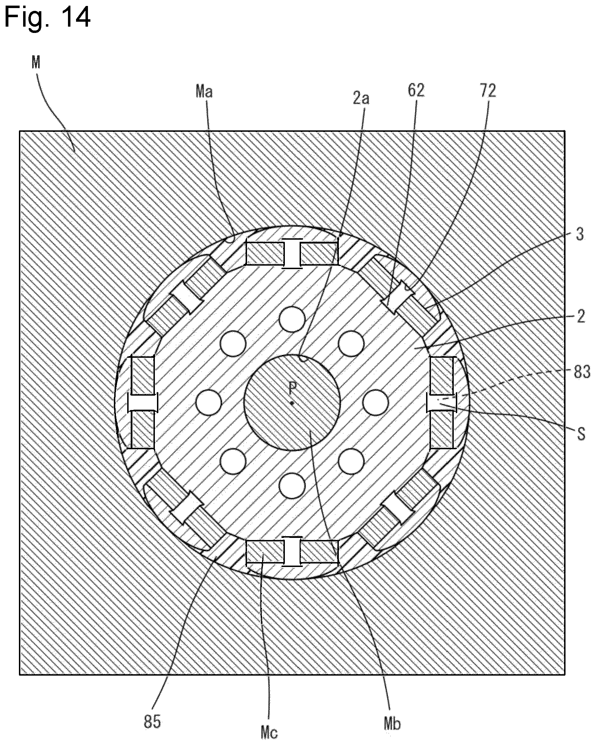

Fig. 14 is a cross-sectional view of the rotor core 2 and the plurality of core pieces 3 inserted in the accommodation space Ma of the mold M, and the mold M, after the resin filling step S5 is performed. As illustrated in Fig. 14, the rotor core 2 and the plurality of core pieces 3 are integrated by the resin 85 filled in the space in the mold M. The filled resin 85 is solidified to form the resin portion 5 of the rotor 1. In the present embodiment, the resin filling step S5 is performed after the connecting portion removing step S4 is performed. However, the resin filling step S5 may be performed before the connecting portion removing step S4 is performed.

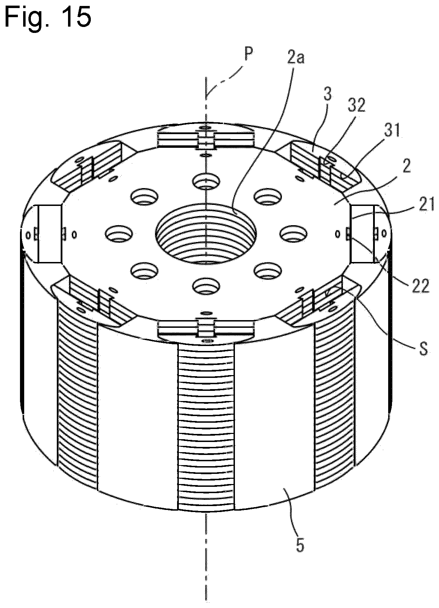

Thereafter, as illustrated in Fig. 15, the rotor core 2 and the plurality of core pieces 3 integrated by the resin portion 5 are taken out from the mold M. As a result, the circumferential positioning portions Mc of the mold M positioned between the rotor core 2 and the plurality of core pieces 3 are removed. As a result, a plurality of magnet arrangement spaces S arranged in the circumferential direction are formed between the rotor core 2 and the core pieces 3.

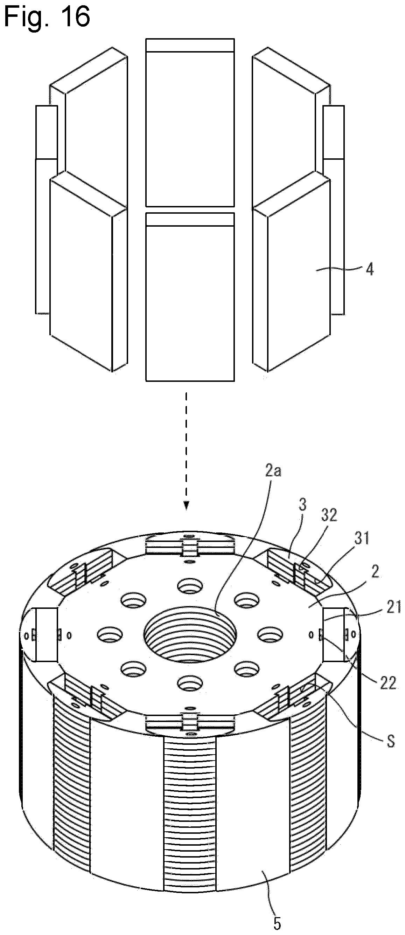

In the magnet arranging step S6, the magnet 4 is arranged in the magnet arrangement space S. Specifically, as illustrated in Fig. 16, the magnet 4 is disposed in each of the plurality of magnet arrangement spaces S. That is, in the magnet arranging step S6, the plurality of magnets 4 are arranged in the magnet arrangement spaces S formed by removing the connecting portions 83 in the connecting portion removing step S4.

As a result, the rotor 1 in which the plurality of core pieces 3 are separated in the circumferential direction and the plurality of magnets 4 are separated in the circumferential direction is manufactured. Accordingly, in the rotor 1, the magnetic flux hardly flows in the circumferential direction. Therefore, the rotor 1 with improved magnetic characteristics can be obtained.

As described above, the method of manufacturing the rotor 1 according to the present embodiment is a method of manufacturing the rotor 1 in which the core plates 60 each extending in the radial direction with respect to the central axis P are laminated in the thickness direction, the plurality of piece plates 70 arranged in the circumferential direction at positions separated radially outward with respect to the core plate 60 are laminated in the thickness direction, and the plurality of magnets 4 are located between the core plate 60 and the plurality of piece plates 70. The method of manufacturing the rotor 1 includes: the punching step S2 of punching the steel sheet 80 to form the laminated steel sheet 81 having the core plate 60, the plurality of piece plates 70, and the plurality of connecting portions 83 each connecting each of the plurality of piece plates 70 and the core plate 60 in the radial direction; the laminating step S3 of laminating the laminated steel sheets 81 in the thickness direction to form the laminated body 84; and the connecting portion removing step S4 of removing the plurality of connecting portions 83 from the laminated body 84 to form the magnet arrangement spaces S in each of which the magnet 4 is arranged between the core plate 60 and each of the plurality of piece plates 70.

In the above-described manufacturing method, the laminated steel sheet 81 in which the core plate 60 and the piece plate 70 are connected by the connecting portion 83 is formed. By laminating the laminated steel sheets 81 having the connecting portions 83 in the laminating step S3, the workability of the work of laminating the laminated steel sheets 81 can be improved.

The connecting portion 83 is removed after the plurality of laminated steel sheets 81 are laminated. As a result, the magnet arrangement space S in which the magnet 4 is to be arranged is formed between the core plate 60 and the piece plate 70. That is, by the above-described manufacturing method, the rotor 1 in which the plurality of magnets 4 are arranged in the circumferential direction on the radially outer side of the core plate 60 and the plurality of piece plates 70 are arranged in the circumferential direction on the radially outer side of the plurality of magnets 4 can be manufactured. In the rotor 1, the plurality of magnets 4 and the plurality of piece plates 70 are separated from each other in the circumferential direction. This makes it possible to prevent the magnetic flux of the magnet 4 from flowing in the circumferential direction. Therefore, the rotor 1 with improved magnetic characteristics can be obtained. Therefore, it is possible to provide a manufacturing method capable of easily manufacturing the rotor 1 with improved magnetic characteristics.

The rotor 1 according to the present embodiment, manufactured by the above-described manufacturing method, includes the cylindrical rotor core 2 in which the core plates 60 are laminated in the thickness direction and which extends in the axial direction, the plurality of core pieces 3 in each of which the piece plates 70 are laminated in the thickness direction and extend in the axial direction and which are arranged in the circumferential direction at positions spaced apart radially outward from the rotor core 2, and the plurality of magnets 4 each of which extends in the axial direction and which are arranged in the circumferential direction between the rotor core 2 and the plurality of core pieces 3. The rotor core 2 includes, on its radially outer surface, the core outer surface 21 extending in the circumferential direction along the radially inner surface of the magnet 4 when viewed in the axial direction, and the core recess 22 recessed radially inward with respect to the core outer surface 21. The core piece 3 includes, on its radially inner surface, the piece inner surface 31 extending in the circumferential direction along the radially outer surface of the magnet 4 when viewed in the axial direction, and the piece recess 32 recessed radially outward with respect to the piece inner surface 31.

In the rotor 1 described above, before the magnet 4 is inserted during manufacturing, the connecting portion 83 connecting the core piece 3 and the rotor core 2 is disposed between the piece recess 32 located on the radially inner surface of the core piece 3 and the core recess 22 located on the radially outer surface of the rotor core 2. That is, when the laminated steel sheet 81 is laminated during manufacturing, the laminated steel sheet 81 can be laminated in a state where the connecting portion 83 that connects the core piece 3 and the rotor core 2 is disposed, in the rotor 1. As a result, the workability of the lamination work of the laminated steel sheet 81 can be improved. Therefore, it is possible to provide the rotor 1 that is easily manufacturable and has improved magnetic characteristics.

In the rotor 1, the shear plane Sp and the fracture plane Fp are aligned in the thickness direction on the end surface of the core plate 60 constituting the inner surface of the core recess 22 of the rotor core 2. On the end surface of the piece plate 70 constituting the inner surface of the piece recess 32 of the core piece 3, the shear plane Sp and the fracture plane Fp are aligned in the thickness direction.

As described above, the steel sheet 80 is punched halfway in the thickness direction by the pushback process, returned to the original position, and then divided to form the shear plane Sp and the fracture plane Fp on the end face of the steel sheet 80.

In the above-described configuration, the shear plane Sp and the fracture plane Fp are formed on the end surfaces of the core plate 60 and the piece plate 70 constituting the inner surface of the core recess 22 and the inner surface of the piece recess 32, respectively. Therefore, the inner surface of the core recess 22 and the inner surface of the piece recess 32 are formed by the pushback process.

That is, when the portion to be the core piece 3 and the portion to be the rotor core 2 are punched out from the steel sheet 80, they are punched out from the steel sheet 80 in a state having the connecting portion 83 connecting them by the pushback process, in the rotor 1. Therefore, at the time of manufacturing the rotor 1, the laminated steel sheet 81 in a state where the portion to be the core piece 3 and the portion to be the rotor core 2 are connected can be laminated. As a result, the workability of the lamination work of the laminated steel sheet 81 can be more improved. Therefore, it is possible to provide the rotor 1 that is more easily manufacturable and has improved magnetic characteristics.

### (Other embodiments)

While the embodiment of the present invention has been described above, the above embodiment is merely an example for implementing the present invention. Thus, the present invention is not limited to the embodiment described above, and the embodiment described above may be appropriately modified and implemented without departing from the scope of the present invention.

In the present embodiment, the rotor core 2 has a polygonal shape when viewed in the axial direction. However, the rotor core may have a circular shape when viewed in the axial direction.

In the above embodiment, when the rotor core 2 is viewed in the axial direction, the core recess 22 is located at the center of the core outer surface 21. However, the core recess may be located at a position other than the center of the core outer surface.

In the above embodiment, the rotor core 2 has one core recess 22 for one core outer surface 21. However, the rotor core may have two or more core recesses per core outer surface.

In the present embodiment, when the core piece 3 is viewed in the axial direction, the piece recess 32 is located at the center of the piece inner surface 31. However, the piece recess may be located at a position other than the center of the piece inner surface.

In the above embodiment, the core piece 3 has one piece recess 32. However, the core piece may have two or more piece recesses.

In the above embodiment, the core plate 60 includes a plurality of core caulking portions 61. The core plates 60 adjacent to each other in the lamination direction are connected in the thickness direction by being caulked by the plurality of core caulking portions 61. However, the core plate may not have the caulking portion. The core plates adjacent to each other in the lamination direction may be connected to each other by another method. The core plates adjacent to each other in the lamination direction may be connected to each other by welding.

In the present embodiment, the piece plate 70 includes the piece caulking portion 71. The piece plates 70 adjacent to each other in the lamination direction are connected to each other in the thickness direction by caulking using the piece caulking portions 71. However, the piece plate may not have the caulking portion. The piece plates adjacent to each other in the lamination direction may be connected to each other by another method. For example, the piece plates adjacent to each other in the lamination direction may be connected by welding.

In the pushback step of the above embodiment, the tool T1 moves a distance by which the connecting portions 83 are not separated from the core plate 60 and the plurality of piece plates 70. However, in the pushback step, the tool T1 may move a distance by which the connecting portions are separated from the core plate and the plurality of piece plates.

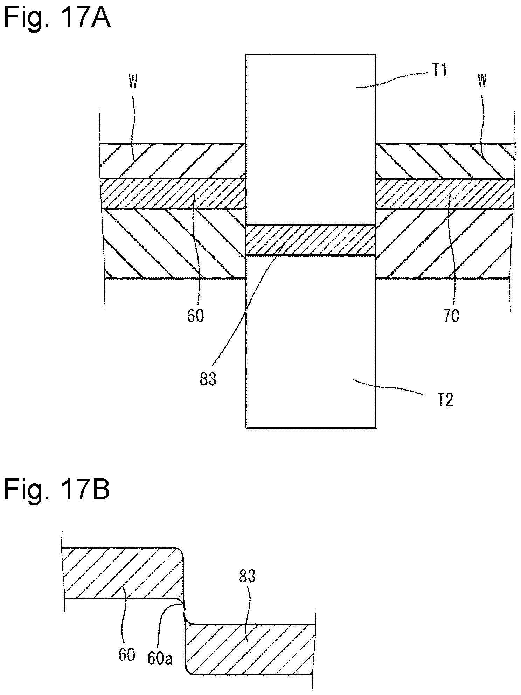

As illustrated in Fig. 17A, when the connecting portions 83 are separated from the core plate 60 and the plurality of piece plates 70, as illustrated in Fig. 17B, a protruding portion 60a is formed at the separated end on one surface in the thickness direction of each of the core plate 60 and the plurality of piece plates 70. That is, when the tool T1 moves to one side in the thickness direction with respect to the tool W sandwiching the core plate 60 and the plurality of piece plates 70, the protruding portion 60a protruding to one side in the thickness direction is formed at each end portion of the core plate 60 and the plurality of piece plates 70.

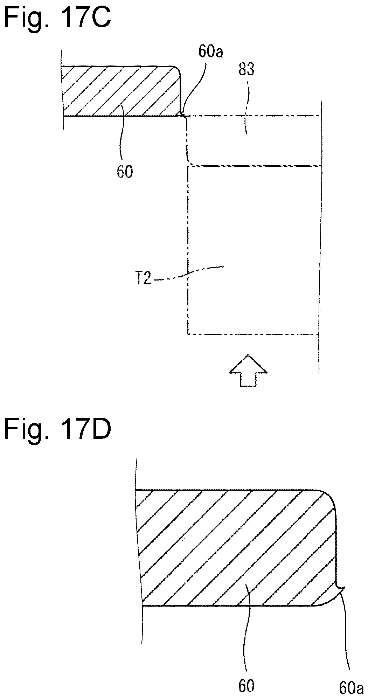

Then, the tool T2 moves to the other side in the thickness direction of the core plate 60 and the plurality of piece plates 70 with respect to the tool W, and returns the connecting portions 83 to the original positions with respect to the core plate 60 and the plurality of piece plates 70. Then, as illustrated in Fig. 17C, the protruding portion 60a is deformed to the other side in the thickness direction. As a result, as illustrated in Fig. 17D, the protruding portion 60a protrudes to the other side in the thickness direction. Therefore, among the end portions of the core plate 60 and the plurality of piece plates 70, on the inner surface of the core plate recess 62 and the inner surface of the piece plate recess 72 subjected to the pushback process, the protruding portion 60a protruding in a direction opposite to the protrusion formed on the other end portion is formed.

That is, in the pushback step, when the tool T1 moves a distance to separate the boundaries between the core plate and the plurality of piece plates, and the connecting portions, the core plate and the piece plates each have the protruding portion protruding to one side in the thickness direction at the end portion constituting the core outer surface and the end portion constituting the piece inner surface. The core plate and the piece plate each have a protruding portion protruding to the other side in the thickness direction at an end portion constituting an inner surface of the core recess and an end portion constituting an inner surface of the piece recess.

The core plate recess and the piece plate recess of the rotor having the above-described configuration are formed by the pushback process. The portions other than the core plate recess and the piece plate recess are formed by punching. That is, the laminated steel sheet of the rotor described above is punched out from the steel sheet in a state having a connecting portion connecting them by the pushback process. Such a pushback process can also improve the workability of the steel sheet lamination work.

In the method of manufacturing the rotor 1 of the embodiment, the core plate 60 and the piece plate 70 are connected to each other via the connecting portion 83 obtained by applying the pushback process thereto. However, the core plate and the piece plate may be connected via another connecting member in which an end portion on the radially outer side is fitted into the piece plate recess and an end portion on the radially inner side is fitted into the core plate recess. Even in that case, in the laminating step, the plurality of piece plates and the core plate can be laminated in a state where they are connected to each other. As a result, the workability of the steel sheet lamination work can be improved.

### (Configuration example)

The present technique can also have configurations as described below.
(1) A rotor manufacturing method is a method of manufacturing a rotor in which a core plate extends in a radial direction with respect to the central axis, a plurality of piece plates are arranged in a circumferential direction at positions spaced apart radially outward from the core plate, a plurality of the core plates are laminated in a thickness direction, a plurality of each of the plurality of piece plates are laminated in the thickness direction, and a plurality of magnets are located between the core plate and the plurality of piece plates. The rotor manufacturing method includes: a punching step of punching a steel sheet to form a laminated steel sheet including the core plate, the plurality of piece plates, and a plurality of connecting portions each connecting each of the plurality of piece plates and the core plate in a radial direction; a laminating step of laminating the laminated steel sheet in the thickness direction to form a laminated body; and a connecting portion removing step of removing the plurality of connecting portions from the laminated body, and forming magnet arrangement spaces for arranging the plurality of magnets between the core plate and the plurality of piece plates.
(2) In the rotor manufacturing method according to (1), the punching step includes a pushback step of performing a pushback process on the plurality of connecting portions with respect to the core plate and the plurality of piece plates. The core plate and the plurality of piece plates are connected to each other in the radial direction by the plurality of connecting portions returned to the original positions with respect to the core plate and the plurality of piece plates in the pushback step.
(3) In the rotor manufacturing method according to (2), in the pushback step, the pushback process is performed on a radially inner side of each of the plurality of connecting portions at a position radially inward of a radially outer end surface of the core plate, and the pushback process is performed on a radially outer side of each of the plurality of connecting portions at a position radially outward of a radially inner end surface of the piece plate.
(4) The rotor manufacturing method according to any one of (1) to (3) further includes a magnet arranging step of arranging the plurality of magnets in the magnet arrangement spaces formed by removing the plurality of connecting portions in the connecting portion removing step.
(5) In the rotor manufacturing method according to any one of (1) to (4), the laminating step includes laminating a plurality of the laminated steel sheets adjacent to each other in a lamination direction while caulking in the thickness direction at a caulking position of the core plate and at a caulking position of each of the plurality of piece plates.
(6) A rotor includes: a rotor core in a cylindrical shape in which steel sheets are laminated in a thickness direction and which extends in an axial direction; a plurality of core pieces in each of which steel sheets are laminated in the thickness direction and each of which extends in the axial direction, the plurality of core pieces being arranged in a circumferential direction at positions spaced apart radially outward from the rotor core; and a plurality of magnets each of which extends in the axial direction and which are arranged in the circumferential direction between the rotor core and the plurality of core pieces. The rotor core includes, on a radially outer surface, a core outer surface extending in the circumferential direction along a radially inner surface of each of the plurality of magnets as viewed in the axial direction, and a core recess recessed radially inward with respect to the core outer surface. The core piece includes, on a radially inner surface, a piece inner surface extending in the circumferential direction along a radially outer surface of each of the plurality of magnets as viewed in the axial direction, and a piece recess recessed radially outward with respect to the piece inner surface.
(7) In the rotor according to (6), on an end surface of each of the steel sheets constituting an inner surface of the core recess of the rotor core, a shear plane and a fracture plane are aligned in the thickness direction, and on an end face of each of the steel sheets constituting an inner surface of the piece recess of the core piece, a shear plane and a fracture plane are aligned in the thickness direction.
(8) In the rotor according to (6), the steel sheet includes a protruding portion protruding to one side in the thickness direction, at each of an end portion constituting the core outer surface and an end portion constituting the piece inner surface, and a protruding portion protruding to another side in the thickness direction, at each of an end portion constituting an inner surface of the core recess and an end portion constituting an inner surface of the piece recess.

### Industrial Applicability

The present invention is applicable to a method of manufacturing a rotor including a rotor core, a plurality of core pieces arranged in a circumferential direction at positions radially separated from the rotor core, and a plurality of magnets arranged in the circumferential direction between the rotor core and the plurality of core pieces.

### Reference Signs List

- 1: rotor
- 2: rotor core
- 2a: shaft hole
- 21: core outer surface
- 22: core recess
- 3: core piece
- 31: piece inner surface
- 32: piece recess
- 4: magnet
- 5: resin portion
- 60: core plate
- 60a: protruding portion
- 61: core caulking portion
- 61a: caulking recess
- 61b: caulking protrusion
- 62: core plate recess
- 70: piece plate
- 71: piece caulking portion
- 71a: caulking recess
- 71b: caulking protrusion
- 72: piece plate recess
- 80: steel sheet
- 81: laminated steel sheet
- 82: central hole
- 83: connecting portion
- 84: laminated body
- 85: resin

## Claims

1. A rotor manufacturing method for manufacturing a rotor (1) in which a core plate (60) extends in a radial direction with respect to a central axis (P), a plurality of piece plates (70) are arranged in a circumferential direction at positions spaced apart radially outward from the core plate (60), a plurality of the core plates (60) are laminated in a thickness direction, a plurality of each of the plurality of piece plates (70) are laminated in the thickness direction, and a plurality of magnets (4) are located between the core plate (60) and the plurality of piece plates (70), the method comprising:
a punching step of punching a steel sheet (80) to form a laminated steel sheet (81) including the core plate (60), the plurality of piece plates (70), and a plurality of connecting portions (83) each connecting each of the plurality of piece plates (70) and the core plate (60) in a radial direction;
a laminating step of laminating the laminated steel sheet (81) in the thickness direction to form a laminated body (84); and
a connecting portion removing step of removing the plurality of connecting portions (83) from the laminated body (84), and forming magnet arrangement spaces (S) for arranging the plurality of magnets (4) between the core plate (60) and the plurality of piece plates (70).

2. The rotor manufacturing method according to claim 1, wherein
the punching step includes a pushback step of performing a pushback process on the plurality of connecting portions (83) with respect to the core plate (60) and the plurality of piece plates (70), and
the core plate (60) and the plurality of piece plates (70) are connected to each other in the radial direction by the plurality of connecting portions (83) returned to original positions with respect to the core plate (60) and the plurality of piece plates (70) in the pushback step.

3. The rotor manufacturing method according to claim 2, wherein in the pushback step, the pushback process is performed on a radially inner side of each of the plurality of connecting portions (83) at a position radially inward of a radially outer end surface of the core plate (60), and the pushback process is performed on a radially outer side of each of the plurality of connecting portions (83) at a position radially outward of a radially inner end surface of the piece plate (70).

4. The rotor manufacturing method according to any one of claims 1 to 3, further including a magnet arranging step of arranging the plurality of magnets (4) in the magnet arrangement spaces (S) formed by removing the plurality of connecting portions (83) in the connecting portion removing step.

5. The rotor manufacturing method according to any one of claims 1 to 4, wherein the laminating step includes laminating a plurality of the laminated steel sheets (81) adjacent to each other in a lamination direction while caulking in the thickness direction at a caulking position of the core plate (60) and at a caulking position of each of the plurality of piece plates (70).

6. A rotor (1) comprising:
a rotor core (2) in a cylindrical shape in which steel sheets (80) are laminated in a thickness direction and which extends in an axial direction;
a plurality of core pieces (3) in each of which steel sheets (80) are laminated in the thickness direction and each of which extends in the axial direction, the plurality of core pieces (3) being arranged in a circumferential direction at positions spaced apart radially outward from the rotor core (2); and
a plurality of magnets (4) each of which extends in the axial direction and which are arranged in the circumferential direction between the rotor core (2) and the plurality of core pieces (3), wherein
the rotor core (2) includes, on a radially outer surface:
a core outer surface (21) extending in a circumferential direction along a radially inner surface of each of the plurality of magnets (4) as viewed in the axial direction; and
a core recess (22) recessed radially inward with respect to the core outer surface (21), and
each of the plurality of core pieces (3) includes, on a radially inner surface:
a piece inner surface (31) extending in the circumferential direction along a radially outer surface of each of the plurality of magnets (4) as viewed in the axial direction; and
a piece recess (32) recessed radially outward with respect to the piece inner surface (31).

7. The rotor (1) according to claim 6, wherein
on an end surface of each of the steel sheets (80) constituting an inner surface of the core recess (22) of the rotor core (2),
a shear plane (Sp) and a fracture plane (Fp) are aligned in the thickness direction, and
on an end face of each of the steel sheets (80) constituting an inner surface of the piece recess (32) of the core piece (3), a shear plane (Sp) and a fracture plane (Fp) are aligned in the thickness direction.

8. The rotor (1) according to claim 6 or 7, wherein
the steel sheet (80) includes:
a protruding portion (60a) protruding to one side in the thickness direction, at each of an end portion constituting the core outer surface (21) and an end portion constituting the piece inner surface (31); and
a protruding portion (60a) protruding to another side in the thickness direction, at each of an end portion constituting an inner surface of the core recess (22) and an end portion constituting an inner surface of the piece recess (32).
